# EUROPEAN PATENT SPECIFICATION

(11) **EP 0 495 407 B1**
(45) Date of publication and mention of the grant of the patent: **18.10.1995**
(21) Application number: 92100338.0
(22) Date of filing: 10.01.1992
(51) Int. Cl.: C08B 37/00

(54) **Column carbon treatment of polysaccharides**
Behandlung von Polysacchariden auf einer Säule gefüllt mit Kohle
Traitement des polysaccharides sur colonne de charbon

(30) Priority: 16.01.1991 US 642095
(43) Date of publication of application: 22.07.1992
(73) Proprietor: National Starch and Chemical Investment Holding Corporation, Wilmington, Delaware 19809 (US)
(72) Inventor: Walsh, Leo, Sayreville, New Jersey 08872 (US); Kasica, James, Whitehouse Station, New Jersey 08889 (US)
(74) Representative: Hagemann, Heinrich, Dr.rer.nat., Dipl.-Chem.

(56) References cited:
- WO-A-89/04369
- FR-A- 2 190 835
- US-A- 3 788 910
- US-A- 4 159 223
- US-A- 4 447 532

## Description

This invention relates to a process for removing off-flavors and colors from polysaccharides, such as starch, maltodextrin and dextrin, by means of an activated carbon column treatment.

Activated carbon has been used commercially in the manufacture of sweeteners that are derived from starch. In manufacturing sweeteners, syrups of glucose, dextrose or isoglucose (high fructose corn syrup) derived from corn starch are purified and decolorized with activated carbon. A syrup that has been only partially converted to sugar from starch (an incomplete conversion), and is treated with activated carbon, frequently contains emulsified carbon fines. Emulsified carbon fines may remain even after filtration of the syrup.

When activated carbon is used to purify and decolorize starch, maltodextrin or dextrin by processes known in the art, the starch, maltodextrin or dextrin emulsifies carbon fines, taking on a gray color which is very difficult to remove.

When used in significant quantities, starches, maltodextrins and dextrins have been identified as the cause of undesirable flavors and odors (e.g., burnt or cereal notes) and colors (e.g., yellow, brown or caramel colors) in foods, flavors and fragrances and pharmaceuticals. Thus, effective starch, maltodextrin and dextrin purification treatments are needed.

Without addressing the carbon fine emulsification problem, batch treatment of enzyme-converted maltodextrin, followed by filtration, was reported as a means of maltodextrin purification in U.S. Pat. No. -A-4,447,532, issued May 8, 1984 to Coker, et al.

The international application WO-A-8 904 369 discloses a method for purification of an aqueous solution of viscous polysaccharides by treating the solution with activated charcoal. The method is said to be especially useful for the purification of scleroglucan. Also this reference is not concerned with the problem of emulsified carbon fines.

It has now been discovered that by controlling the amount of carbon fines generated during column preparation and treatment steps, polysaccharide dispersions may be effectively column treated with granular, activated carbon to purify and decolorize the polysaccharide. When treated with this process, the polysaccharide does not develop the gray color which is characteristic of emulsified carbon fines.

This invention provides a process for treating polysaccharides with activated carbon, comprising the steps:
a) dispersing the polysaccharide in an aqueous medium at 14 to 40% solids:
b) passing the dispersed polysaccharide through at least one column packed with 0,1 to 20%, on a dry weight basis for any given amount of polysaccharide, pre-washed, granular, activated, carbon at a flow rate of 0,1 to 20,0 bed volumes/hour, which column has been loaded with wetted carbon granules which remain wet during loading and operation, back-washed and extensively flushed to remove carbon fines out of the carbon bed, and pre-heated, and avoiding, during treatment, disruption of the bed and avoiding a water level drop below the height of the carbon in the column;
c) recovering the polysaccharide dispersion in a form which is substantially free of carbon fines, as evidenced by the absence of a gray color. The polysaccharide treated by this process is characterized by a bland, non-objectionable color and flavor and is substantially free of off-flavors normally associated with starch, maltodextrin and dextrin products.

Following the activated carbon treatment, the polysaccharide may be dried.

Polysaccharides which may be used herein are selected from the group consisting of starch, dextrins having a DE of 5 or less, maltodextrins having a DE of 5 or less, starch ether or ester derivatives and their hydrolysates, dextrin ether or ester derivatives, maltodextrin ether or ester derivatives, and combinations thereof.

The hydrolysis products may be formed from starch by acid, heat or enzyme degradation, or a combination thereof.

The carbon treatment process requires that the polysaccharide be at least partially solubilized before passing it through the column. Starch, maltodextrin or dextrin may be dispersed by any method known in the art, preferably by heating it in water for a period of time sufficient to gelatinize the starch, maltodextrin or dextrin, or by treatment with alkali to disperse the starch, maltodextrin or dextrin. The starch, maltodextrin or dextrin may be pregelatinized, dried and then rehydrated in cold or hot water to form a dispersion. Jet-cooking, drum-drying, spray-drying and steam injection atomization processes, and other processes may be used to gelatinize these polysaccharides. The practitioner will recognize that different processes known in the art may be used to solubilize polysaccharides other than starch, maltodextrin and dextrin. In a preferred embodiment, the starch is slurried in water and jet-cooked at approximately 149°C (300°F) to instantaneously and thoroughly disperse the starch.

The conversion of starch to a dextrin or to some other, lower molecular weight form of starch, may be achieved by standard heat, acid or enzyme (e.g. alpha-amylase) conversion techniques which are well known in the art. Starches, dextrins and maltodextrins may be derivatized to add ether or ester substituents. Each of these processes should be carried out prior to treatment with activated carbon so as to permit removal of any contaminants added during the modification steps.

The above starch modification processes, i.e., pregelatinization, conversion derivatization and dextrinization, are conventional, well known to those skilled in the art and described in publications such as "Starch and Its Modifications", M.W. Rutenberg, pp. 22-36, in Handbook of Water-Soluble Gums and Resins, Robert L. Davidson (Editor), McGraw Hill Book Company, New York, New York, 1980.

To prevent the emulsification of carbon fines, it is essential to remove the fines by pre-washing the carbon, wetting the carbon before and during the column preparation, carefully loading the column so as not to generate additional carbon fines and extensively flushing the column to wash any fines out of the bed. During treatment, disruption of the bed must be avoided and additional back-washing steps may be needed to purify a column bed which has been disrupted.

Granular, rather than powdered, activated carbon must be used in the column. Granular carbon having a high degree of hardness and a 12 x 40 mesh size (U.S. Sieve series) is preferred. The activated carbon must be loaded into a column or otherwise immobilized in order to reduce carbon fine generation. If the carbon granules are mixed into a polysaccharide dispersion and then filtered out, the carbon treated polysaccharide will contain carbon fines and be characterized by an undesirable gray color. Likewise, while prewashing the carbon, excess agitation should be avoided so as to reduce generation of fines.

After prewashing the carbon, the carbon should be wetted and should remain wet during column loading and operation so as to avoid forming air bubbles and trapping the air bubbles within the column. The air bubbles reduce the absorptive capabilities of the carbon. In a preferred embodiment the carbon is wetted in water for 24 hours. In another preferred embodiment the carbon may be boiled in water for 2 hours to wet the carbon and liberate fines which can be decanted from the wetted carbon.

The wetted carbon should be transferred into a column in a wet form to avoid generation of new fines and dust. Additionally, if the water level drops below the height of the carbon in the column, carbon fines appear when the carbon is resubmerged in water.

To complete the preparation of a column suitable for treating polysaccharides, the column containing the carbon must be back-flushed. To back-flush the column, water is pumped from the bottom of the column to the top against the force of gravity, carrying upward the smaller carbon particles. This movement of water upward through the column stratifies the particles by size, with the larger particles falling to the bottom and the fines being carried up and out of the top of the column. This classification of the carbon by particle size results in an efficient configuration for treatment of polysaccharides. The smaller particles have more surface area to absorb impurities in the polysaccharide dispersion as the dispersion is applied to the top of the column.

So long as the column can be loaded as described herein to minimize the generation of carbon fines, any size or type of column may be used herein. The flow rate, pump size, valves, volume of wash water, temperature, pH and other aspects of the carbon treatment process will vary depending upon several variables, including the size of the column, the nature of the material to be purified and whether the process is continuous or batch. About 0.1 to 20% carbon, preferably 1 to 7% carbon, on a dry weight basis may be used to treat any given amount of starch.

The rate at which the carbon treatment may be conducted depends upon how much purification is required, together with the variables listed above. While rates of 0.1 to 20.0 bed volumes/hour may be employed, the practitioner will recognize that only limited amounts of purification can be accomplished at the higher rates. In a preferred embodiment a treatment rate of 0.2 to 3.0 bed volumes/hour is selected.

The process may be carried out at any temperature so long as the polysaccharide remains substantially dispersed and does not retrograde or gel before or during passage through the column. A change in temperature also will affect the adsorptive capability of the carbon. The process may be carried out at temperatures ranging from 0 to 100°C, preferably about 20 to 30°C for non-retrograding polysaccharides and about 60 to 100°C for retrograding polysaccharides.

Because the nature of activated carbon may change with a change in pH, the pH of the dispersed polysaccharide should be monitored throughout the treatment so as to avoid loss of purification capacity. The carbon may change the pH of the material being treated and pH adjustment of the treated product may be required. In a preferred embodiment, the pH is maintained between 3 and 8 during treatment.

The polysaccharide dispersion may be passed through more than one activated carbon column.

In a preferred embodiment, a 14-32% dispersion of a dextrin at pH of 4 to 7 is treated at 60-95°C by passing the dispersion through a 102 cm (40 inch) glass column, having a 5.1 cm (2 inch) internal diameter, which has been packed with granular activated carbon as described above. The dispersion is passed through the column at a flow rate of 0.2 to 3.0 bed volumes/hour. About 1 to 7% carbon on a dry weight basis is used to treat the dextrin on a dry weight basis.

### Example 1

Dextrins were treated by the following activated carbon column process to improve color and flavor characteristics.

### A. Carbon Pre-wash

About 600 grams of activated carbon granules (CPG LF 12X40 obtained from Calgon Carbon Corporation, Pittsburgh, PA) were wetted with about 2,000 ml of polished water (filtered on a ion- exchange column and on an activated carbon column) in a 4,000 ml beaker. The water and surface carbon fines were decanated, leaving the carbon granules submerged in water. The carbon granules were rinsed with aliquots of an excess of polished water until the water became clear when swirled around the granules.

### B. Column Preparation

A gasket and a 300 micron screen were placed on the bottom of a 91 cm (36 inch) jacketed glass column (2.54 cm (1 inch) internal diameter) and the bottom was capped with an inlet/outlet port and an inlet/outlet valve. The washed carbon granules were rinsed from the beaker into the column through a funnel placed at the top of the column until the carbon granules reached a height of 46 cm (18 inch) within the column. The carbon was kept submerged in water at all times and excess water was drained while filling the column. A gasket and a 300 micron screen were placed on the top of the column and the column was capped with an inlet/outlet port, sample valve, pressure gauge and an inlet/outlet valve.

### C. Column Back-Wash

A pump was connected to the valve at the bottom of the column and an inlet line to the pump was placed in a 19 liter (5 gallon) pail of polished water. An outlet line connected the valve at the top of the column to a drain. The sample valve was closed, the bottom and top inlet/outlet valves were opened and water was pumped into the bottom of the column at initial rate fast enough to remove any trapped air bubbles. The rate was lowered to allow the carbon to settle in the column, then the rate was increased to provide expansion of the carbon column to 125 to 150 percent of its resting height.

The back-washing was continued until the carbon had been washed with 100 bed volumes of polished water (about 23-24 liters). The back-washing was discontinued and the carbon permitted to stand (wetted) for 24 hours. The column was heated to 65°C, back-flushed with 65°C polished water to remove trapped air, and the pump was disconnected from the bottom of the column. The pump was connected to the valve at the top of the column.

### D. Sample Treatment

A total of 1,000 grams of dextrin (a canary tapioca pyrodextrin) were dispersed in 3,000 ml polished water and jet-cooked at 149°C (300°F) with 4.57 Kg/cm² (65 psi) inlet steam pressure. The dispersed dextrin sample was held in a boiling water bath and an inlet line to the pump on the column was placed into the sample. The pump was set at a flow rate of 3 bed volumes/hour and the dispersed dextrin was pumped through the carbon column. Aliquots (about 100 ml) of dispersed dextrin were collected from the bottom of the column and visually evaluated. Of the 23 aliquots examined, none contained visible, detectable fines. The dextrin dispersions were clear, without the gray, color normally associated with carbon treatment, and were lighter, less yellow/brown than a control dextrin dispersion. The emulsification of carbon fines normally observed in carbon-treated starch or dextrin dispersions was absent following this treatment.

### Example 2

This example illustrates a larger-scale column process for treating dextrin with activated carbon.

Carbon-treated dextrin was prepared by the method of Example 1, except eight 91 cm (36 inch) jacketed glass columns (2.54 cm (1 inch) internal diameter) were each packed with about 175 grams of Calgon CPG LF 12X40 activated carbon granules and the columns were heated to 95°C at the end of the back-washing step.

A 29 Kg sample of dextrin (a pregelatinized, alpha-amylase converted, tapioca dextrin, having a DE of 1 to 3) was dispersed in 80 liters polished water and jet-cooked at 275°C and 4.22 Kg/cm² (60 psi) inlet steam pressure. The dispersed dextrin was held in a boiling water bath prior to and during the column carbon treatment and treated samples were collected and held in a boiling water bath, filtered on diatomaceous earth, then spray-dried. No carbon fines were detected in the treated samples before or after filtration with diatomaceous earth.

### EXAMPLE 3

This example illustrates that dextrin color, odor and flavor were improved by carbon column treatment.

A dextrin sample described in Table I, below, was treated by the process described in Table I and subjected to organoleptic evaluation in a 10% dispersion in distilled water at a pH of 3.9.

**TABLE I**

| **ORGANOLEPTIC EVALUATION OF CARBON-TREATED DEXTRINS** | | | | |
|---|---|---|---|---|
| Sample^{a} | Treatment | Color | Flavor | Odor |
| Tapioca dextrin | Control | Dark yellow, slightly cloudy | strong, caramel, rubber-like, objectionable aftertaste | strong, burnt dextrin |
| Tapioca dextrin | Carbon column^{b} | Lighter yellow, clear | mild, dry, paper-like little aftertaste | very mild, starchy |

| | | | | |
|---|---|---|---|---|
| a. A canary tapioca dextrin. | | | | |
| b. The method of Example 1 was used to treat the dextrin, except that 8,000 grams of dextrin were dispersed in 14 liters of water; 45.72 linear cm (18 linear inches) of carbon were loaded into a 102 cm (40 inch) by 5.1 cm (2 inch) glass column; and 100 bed volumes (93-95 liters) of water were used to back-wash the column. The dextrin was spray-dried after treatment. | | | | |

The results show that the column carbon treatment employed herein yielded an improved dextrin, having bland, non-objectionable flavor and color characteristics.

## Claims

1. A process for treating a polysaccharide selected from the group consisting of starch, dextrins having a DE of 5 or less, maltodextrins having a DE of 5 or less, starch ether or ester derivatives and their hydrolysates, dextrin ether or ester derivatives, maltodextrin ether or ester derivatives, and combinations thereof, with activated carbon, comprising the steps:
a) dispersing the polysaccharide in an aqueous medium at 14 to 40% solids
b) passing the dispersed polysaccharide through at least one column packed with 0,1 to 20%, on a dry weight basis for any given amount of polysaccharide, pre-washed, granular, activated, carbon at a flow rate of 0,1 to 20,0 bed volumes/hour, which column has been loaded with wetted carbon granules which remain wet during loading and operation, back-washed and extensively flushed to remove carbon fines out of the carbon bed, and preheated, and avoiding, during treatment, disruption of the bed and avoiding a water level drop below the height of the carbon in the column; and
wherein the polysaccharide is characterized by bland, non-objectionable color, oder and flavor and is substantially free of off-flavors, odors and carbon fines.

2. The process of claim 1, wherein the flow rate is 0,2 to 3,0 bed volumes/hour.

3. The process of claim 1, further comprising the step of drying the polysaccharide.

4. The process of claim 1, wherein the starch is degraded by acid, heat or enzyme treatment, or a combination thereof, before treatment with activated carbon.

5. The process of claim 1, wherein the starch hydrolysate is dispersed in an aqueous medium at 15 to 40% solids.

6. A polysaccharide treated by the process of claim 1.

## Patentansprüche

1. Verfahren zur Behandlung eines Polysaccharids, ausgewählt aus der aus Stärke, Dextrinen mit einem DE von 5 oder weniger, Maltodextrinen mit einem DE von 5 oder weniger, Stärkeether- oder -esterderivaten und deren Hydrolysaten, Dextrinether- oder -esterderivaten, Maltodextrinether- oder -esterderivaten, und Kombinationen hiervon bestehenden Gruppe, mit Aktivkohle, welches die Schritte umfaßt:
a) Dispergieren des Polysaccharids in einem wäßrigen Medium bei 14 bis 40% Festtoffgehalt,
b) Durchleiten des dispergierten Polysaccharids durch mindestens eine Säule, die für eine vorgegebene Menge Polysaccharid mit 0,1 bis 20% (auf Trockengewichtsbasis) vorgewaschener, granulierter Aktivkohle bepackt ist, bei einer Fließgeschwindigkeit von 0,1 bis 20,0 Bettvolumina/Stunde, wobei die Säule mit angefeuchtetem Kohlegranulat gefüllt worden ist, das während des Einfüllens und des Betriebs naß bleibt, rückgespült und zur Entfernung von Kohlefeinteilen aus dem Kohlenbett extensiv gespült und vorgewärmt worden ist, und wobei während der Behandlung ein Abreißen des Betts vermieden und ein Absinken des Wasserspiegels unter die Füllhöhe der Kohle in der Säule vermieden wird, und
wobei das Polysaccharid durch eine neutrale, einwandfreie Farbe, einen ebensolchen Geruch und ein ebensolches Aroma gekennzeichnet ist und im wesentlichen frei von Beigeschmack, Gerüchen und Kohlefeinteilen ist.

2. Verfahren nach Anspruch 1, bei dem die Fließgeschwindigkeit 0,2 bis 3,0 Bettvolumina/Stunde beträgt.

3. Verfahren nach Anspruch 1, das zusätzlich den Schritt des Trocknens des Polysaccharids umfaßt.

4. Verfahren nach Anspruch 1, bei dem die Stärke vor Behandlung mit der Aktivkohle durch Säure-, Wärme- oder Enzymbehandlung oder eine Kombination abgebaut worden ist.

5. Verfahren nach Anpruch 1, bei dem das Stärkehydrolysat in einem wäßrigen Medium bei 15 bis 40% Feststoffgehalt dispergiert wird.

6. Polysaccharid, behandelt nach dem Verfahren nach Anspruch 1.

## Revendications

1. Procédé de traitement d'un polysaccharide choisi dans le groupe consistant en l'amidon, des dextrines ayant une valeur de ED égale ou inférieure à 5, des maltodextrines ayant une valeur de ED égale ou inférieure à 5, des dérivés d'éthers ou d'esters d'amidon et leurs hydrolysats, des dérivés d'éthers ou d'esters de dextrine, des dérivés d'éthers ou d'esters de maltodextrine et leurs associations, avec du charbon actif, comprenant les étapes consistant :
a) à disperser le polysaccharide dans un milieu aqueux à une teneur en matières solides de 14 à 40 % ;
b) à faire passer le polysaccharide dispersé à travers au moins une colonne garnie avec 0,1 à 20 %, sur la base du poids sec pour n'importe quelle quantité donnée de polysaccharide, de charbon actif granulaire prélavé à un débit de 0,1 à 20,0 volumes de lit/heure, colonne qui a été garnie avec des granules de charbon mouillées qui restent humides au cours de la charge et de l'utilisation, lavée à contre-courant et balayée de manière approfondie pour éliminer les particules fines de charbon hors du lit de charbon, et préchauffée, en évitant au cours du traitement la rupture du lit et en évitant une chute du niveau de l'eau au-dessous du niveau du charbon dans la colonne ; et
dans lequel le polysaccharide est caractérisé par une couleur, une odeur et une saveur douces, non néfastes, et est pratiquement dépourvu de saveurs désagréables, d'odeurs et de particules fines de charbon.

2. Procédé suivant la revendication 1, dans lequel le débit est égal à une valeur de 0,2 à 3,0 volumes de lit par heure.

3. Procédé suivant la revendication 1, comprenant en outre l'étape de séchage du polysaccharide.

4. Procédé suivant la revendication 1, dans lequel l'amidon est soumis à une dégradation par un traitement avec un acide, un traitement par la chaleur ou un traitement enzymatique ou une de leurs associations, avant le traitement avec du charbon actif.

5. Procédé suivant la revendication 1, dans lequel l'hydrolysat d'amidon est dispersé dans un milieu aqueux à une teneur en matières solides de 15 à 40 %.

6. Polysaccharide traité par le procédé suivant la revendication 1.
